Europäisches Patentamt

European Patent Office

Office européen des brevets

(19)

(11) Veröffentlichungsnummer: **0 155 595**
**B1**

(12) # EUROPÄISCHE PATENTSCHRIFT

(45) Veröffentlichungstag der Patentschrift:
23.08.89

(51) Int. Cl.⁴: **B 32 B 27/32**

(21) Anmeldenummer: **85102541.1**

(22) Anmeldetag: **06.03.85**

(54) **Opake siegelfähige Folie mit einer feste Teilchen enthaltenden Trägerschicht auf Basis von Polypropylen.**

(30) Priorität: **15.03.84 DE 3409467**

(43) Veröffentlichungstag der Anmeldung:
**25.09.85 Patentblatt 85/39**

(45) Bekanntmachung des Hinweises auf die Patenterteilung:
**23.08.89 Patentblatt 89/34**

(84) Benannte Vertragsstaaten:
**BE DE FR GB IT NL**

(56) Entgegenhaltungen:
**EP-A-0 004 633**
**EP-A-0 114 311**
**DE-A-3 401 218**
**GB-A-1 441 178**
**GB-A-2 066 342**
**US-A-4 086 317**

(73) Patentinhaber: **HOECHST AKTIENGESELLSCHAFT,
Postfach 80 03 20, D-6230 Frankfurt am Main 80
(DE)**

(72) Erfinder: **Hoheisel, Claus, Dr., Lohmühlweg 13,
D-6200 Wiesbaden (DE)**
Erfinder: **Crass, Günther, Dr., Bachstrasse 7,
D-6204 Taunusstein- Wehen (DE)**
Erfinder: **Janocha, Siegfried, Dr., Weinfeldstrasse
28, D-6200 Wiesbaden (DE)**
Erfinder: **Bothe, Lothar, Dr., Am Heiligenhaus 9,
D-6500 Mainz- Gonsenheim (DE)**
Erfinder: **Dietz, Wolfgang, Dr., Rotenbühler Weg
25, D-6600 Saarbrücken (DE)**

## Beschreibung

Die Erfindung bezieht sich auf eine Folie von der im Oberbegriff des Anspruchs 1 genannten Art und auf Verfahren zu ihrer Herstellung.

Eine Folie dieser Art ist beispielsweise aus der US-A-4 303 708 bekannt geworden. Die Trägerschicht dieser Folie enthält feste Teilchen, die den Film opak machen, wie z. B. aus Titandioxid, Calciumcarbonat, Siliciumdioxid oder organischem Kunststoff. Diese bekannte Folie zeigt als besonderes Merkmal einen besonderen perlmuttartigen Glanz.

Ausgehend von diesem Stand der Technik liegt der Erfindung die Aufgabe zugrunde, eine opake Folie der eingangs genannten Art in der Weise weiterzubilden, daß sie einen metallischen Glanz aufweist, um damit ein besonders verkaufswirksames Aussehen zu erreichen.

Zur weiteren Verbesserung der optischen Wirkung der bekannten Folie hat man bereits ihre eine Oberfläche mit Aluminium bedampft, was aber sehr aufwendig ist und das Produkt stark verteuert. Versucht man dagegen, zur Erzielung eines metallischen Effektes Metallpulver in die Kunststoffmasse vor dem Extrudieren einzumischen, so gibt es bereits beim Mischvorgang Probleme. Außerdem werden durch die Metallteilchen sämtliche Vorrichtungsteile der Anlage, insbesondere die Extrusionseinrichtung und die Zugwalzen, stark verkratzt und müssen häufig ausgetauscht werden. Die Bedruckung dieser Folien erweist sich ebenfalls als schwierig, da sie wegen ihrer hohen elektrischen Leitfähigkeit mit einer Corona nicht mehr wirksam vorbehandelt werden können.

Es stellt sich deshalb zusätzlich die Aufgabe, eine opake Folie mit metallischem Glanz zu finden, die sich auf kostengünstige, einfachere Weise herstellen läßt, die gut bedruckbar ist und deren Siegeleigenschaften und mechanischen Eigenschaften durch den Lösungsweg praktisch nicht verschlechtert werden.

Diese Aufgabe wird gelöst durch die im Anspruch 1 angegebene Folie deren bevorzugte Ausführungsformen in den Ansprüchen 2 bis 6 angegeben sind, und die Verfahren zu ihrer Herstellung nach Anspruch 8 und 9.

Wie sich überraschenderweise gezeigt hat, läßt sich ein metallischer Glanzeffekt auf einfache Weise dadurch erreichen, daß die Folie die im kennzeichnenden Teil des Anspruchs 1 genannten Merkmale aufweist. Das ist insbesondere deshalb nicht naheliegend, weil ein Zusammenhang zwischen dem Zusatz einer Farbsubstanz, insbesondere von farbigen Teilchen und dem erzielten metallischen Glanzeffekt nicht vorhersehbar war. Tatsächlich ist es zur Lösung dieser Aufgabe weiterhin noch erfindungswesentlich, daß die weißen Teilchen überwiegen und daß die Dichte der Folie relativ stark reduziert ist.

Was die Dichte der Folie betrifft, so wird sie dadurch eingestellt, daß man die im Anspruch 8 angegebenen kennzeichnenden Verfahrensmerkmale einhält. Die während der Längsstreckung der extrudierten Folie, welche vor der Querstreckung durchzuführen ist, einzuhaltenden Temperaturen sind relativ niedrig und liegen noch unterhalb der Temperaturen, die vorzugsweise zur Herstellung der bekannten Folie mit perlmuttartigem Glanz einzuhalten sind. Durch diese Streckbedingungen reißt die Polymermatrix an den Oberflächen der zugesetzten festen Teilchen auf und die Trägerschicht erhält eine Vakuolenstruktur. Diese Struktur, welche die Dichte der Folie erniedrigt, dürfte in Verbindung mit der Kombination aus weißen und farbigen Teilchen für den starken metallischen Glanz verantwortlich sein. Die während der übrigen Verfahrensschritte, nämlich Extrusion, Querstreckung und Thermofixierung, einzuhaltenden Parameter entsprechen dem Stand der Technik (US-A-4 303 708).

Die bevorzugten anorganischen weißen Teilchen sind Titandioxid, Siliciumdioxid oder Silikate, insbesondere Calciumcarbonat. Unter thermostabiler Farbsubstanz sind farbige Verbindungen zu verstehen, die sich bei der Extrusionstemperatur praktisch nicht zersetzen. Solche Verbindungen sind beispielsweise synthetische organische Verbindungen wie Fettgelb GGN oder Fettrot HRR, die in dem Polymeren der Trägerschicht voll löslich sind. Bevorzugt werden allerdings als Farbsubstanz feste Teilchen eingesetzt. Hierzu gehören insbesondere anorganische Pigmente auf Basis von farbigen Mineralien. Als besonders bevorzugte farbige Teilchen werden allerdings Rußteilchen verwendet, die der Folie einen metallischen silbrigen Glanz wie der einer Aluminiumfolie verleihen. Unter dem Begriff Rußteilchen sind auch Graphitteilchen zu verstehen. In entsprechender Weise erhält man goldglänzende oder kupferglänzende Folien durch die Kombination von gelben und roten Pigmenten mit den anorganischen weißen Teilchen. Der erzielte Glanzeffekt ähnelt den bei Autolackierungen bekannten Metallic-Effekten. Die farbigen Pigmente zeigen gegenüber den synthetischen organischen Farbsubstanzen höhere Lichtechtheit.

Die Trägerschicht zeigt auf einer oder auf beiden Oberflächen eine siegelfähige Schicht. Diese Deckschichten bestehen aus einem Homopolymerisat von Propylen, Äthylen oder Butylen oder einem Copolymeren oder Terpolymeren aus diesen Monomeren oder aus Mischungen aus diesen Polymeren. In bevorzugter Ausführungsform wird eine Heißsiegelschicht aufgebracht, wie sie in der US-A-4 303 708 beschrieben wurde.

Soll die Folie zur Verpackung von hitzeempfindlichen Gütern wie Schokolade verwendet werden, so besteht die Siegelschicht zweckmäßigerweise aus einer sogenannten Kaltsiegelbeschichtung, die bereits bei relativ niedrigen Temperaturen siegelfähig ist. Solche Beschichtungen auf Latexbasis sind bekannt.

Zur Verbesserung der Bedruckbarkeit der Folie wird sie in üblicher Weise vorbehandelt, insbesondere mit Hilfe einer Coronabestrahlung, die man auf wenigstens eine der beiden Folienoberflächen einwirken läßt.

Die Erfindung wird durch das nachfolgende Beispiel näher erläutert.

Polypropylen mit einem Melt flow index von 230/5 = 10 g/10 min (DIN 53735) wird in einem Extruder aufgeschmolzen. Es enthält 10 Gew.-% Calciumcarbonat (® Millicarb, Hersteller Omya) mit einem mittleren Teilchendurchmesser von 3 µm und 0,3 Gew.-% Ruß (® Corax 6, Hersteller Degussa) mit einem mittleren Teilchendurchmesser von 0,02 µm, jeweils bezogen auf die Gesamtmenge. In einem weiteren Extruder wird ein statistisches Copolymerisat aus einem Gemisch von 96 Gewichtsteilen Propylen und 4 Gewichtsteilen Äthylen aufgeschmolzen. Mit einem Dreischicht-Coextrusionsadapter wird eine Schicht (B) aus dem Polypropylen als Trägerschicht und jeweils eine Schicht (A) aus dem Copolymerisat als Oberflächenschichten coextrudiert. Der aus der Breitschlitzdüse mit 4 m/min austretende dreischichtige Schmelzefilm des Aufbaus ABA wird auf einer gekühlten Walze (Temperatur 10 bis 50°C) abgeschreckt. Die erhaltene Vorfolie wird auf 115°C aufgeheizt und einem Längsstreckwerk zugeführt.

Es besteht aus zwei hintereinander angeordneten Haltewalzeneinrichtungen, wobei die Walzen der nachfolgenden Einrichtung mit höherer Geschwindigkeit drehen als die der ersten. Die Längsstreckung der Folie im Verhältnis 1 : 5,5 erfolgt durch die unterschiedlichen Umfangsgeschwindigkeiten dieser angetriebenen Haltewalzen. Die längsgestreckte Folie wird anschließend in einem Spannrahmen bei 170°C (Lufttemperatur) im Verhältnis 1 : 8,5 in Querrichtung gestreckt. Danach folgt die Thermofixierung der Folie, wobei sie bei 150 bis 160°C unter Spannung gehalten wird.

Die hergestellte Folie hat eine Gesamtdicke von etwa 30 µm, wobei die Siegelschichten jeweils etwa 1 µm dick sind. Sie zeigt eine silberglänzende Struktur und hat ein besonderes werbewirksames Aussehen. Ihre Dichte ist 0,70 g/cm$^3$ (DIN 53479).

Eine analog hergestellte Folie, bei der die Längsstreckung allerdings bei 140 - 145°C durchgeführt wurde, hat dagegen ein mattes, schmutziggraues, unscheinbares Aussehen. Ihre Dicke entspricht exakt der rechnerischen Dichte von 1,08 g/cm$^3$.

Zur Ermittlung der rechnerischen Dichte der Folie wird zunächst für jede Komponente ihr gewichtsmäßiger Anteil am Gesamtgewicht berechnet (z. B. Siegelschicht 6 %, Polymeres der Trägerschicht 84,3 %, CaCO$_3$ 9,4 %, Ruß 0,3 %). Durch Multiplikation dieser Werte mit der jeweiligen Dichte der dazugehörenden Komponente erhält man den jeweiligen Anteil an der Gesamtdichte. Die Summe dieser Anteile ergibt die rechnerische Dichte der Folie.

Durch den Gehalt an Ruß läßt sich der optische Effekt variieren. Oberflächenschichten aus Polypropylen-Homopolymerisat haben überraschenderweise einen besonders starken metallischen Glanz.

Unter den angebenen Bedingungen lassen sich auch andere metallische Glanzeffekte erzielen. So führen gelbe und/oder rote Pigmente zu gelbgoldenen bis rotgoldenen metallic-artig glänzenden Folien.

Diese Folien sind vor allem wegen ihrer optischen Eigenschaften, aber auch aufgrund ihrer Siegeleigenschaften, Festigkeit und lebensmittelrechtlichen Unbedenklichkeit zur Herstellung von Verpackungen auf dem Lebensmittelgebiet, insbesondere zum Einhüllen von Süssigkeiten und Schokolade, hervorragend geeignet.

## Patentansprüche

1. Opake, glänzende, biaxial orientierte Folie, umfassend eine Trägerschicht auf Basis von Polypropylen, in der feste Teilchen einer mittleren Größe von 0,2 bis 20, vorzugsweise 2 bis 8 µm, in einer Menge von 2 bis 25, insbesondere 5 bis 20 Gew.-%, bezogen auf das Gesamtgewicht der Folie, vorhanden sind, sowie siegelfähige äußere Oberflächenschicht(en), wobei die Dichte der Folie kleiner ist als die rechnerische Dichte aus der Summe der Einzelkomponenten, dadurch gekennzeichnet, daß in der Trägerschicht ein Gemisch aus anorganischen weißen festen Teilchen und thermostabiler Farbsubstanz vorhanden ist, wobei der Anteil der Farbsubstanz 0,01 bis 2 Gew.-% beträgt, bezogen auf das Gesamtgewicht der Folie, und die Dichte der Folie maximal 80, vorzugsweise 60 bis 75 % der rechnerischen Dichte ist.

2. Folie nach Anspruch 1, dadurch gekennzeichnet, daß die weißen Teilchen aus Calciumcarbonat, Titandioxid, Siliciumdioxid und/oder einem Silikat und daß die Farbsubstanz aus farbigen, insbesondere schwarzen, gelben und/oder roten, anorganischen Pigmenten besteht, wobei die mittlere Größe der Pigmente kleiner ist als die der weißen Teilchen.

3. Folie nach Anspruch 2, dadurch gekennzeichnet, daß das Gemisch aus Calciumcarbonat-Teilchen als weiße Teilchen und Ruß-Teilchen als schwarze Pigmente besteht, wobei die Rußteilchen eine bevorzugte mittlere Größe im Bereich von 0,01 bis 1 µm besitzen.

4. Folie nach Anspruch 3, dadurch gekennzeichnet, daß die Ruß-Teilchen zu 0,04 bis 1 Gew.-%, bezogen auf das Gesamtgewicht der Folie, vorhanden sind.

5. Folie nach einem der Ansprüche 2 bis 4, dadurch gekennzeichnet, daß das Gemisch aus Teilchen und Pigmenten 7 bis 15 Gew.-% am Gesamtgewicht der Folie beträgt.

6. Folie nach einem der Ansprüche 1 bis 5, dadurch gekennzeichnet, daß ihre Dicke (DIN 53370) 15 bis 60, insbesondere 20 bis 50 µm beträgt, wobei die siegelfähige(n) Oberflächenschicht(en) etwa 0,2 bis 2 µm dick sind.

7. Folie nach einem der Ansprüche 1 bis 6, dadurch gekennzeichnet, daß die Siegelschich t(en) bei einer Temperatur oberhalb von 30°C und unterhalb von 50°C siegelfähig ist (sind).

8. Verfahren zur Herstellung der Folie nach einem der Ansprüche 1 bis 6, bei dem man die Schmelze des die Trägerschicht bildenden Polymeren zusammen mit den darin verteilten Teilchen und Farbsubstanz und die Schmelze des die Siegelschicht(en) bildenden Polymeren gemeinsam und gleichzeitig als übereinanderliegende Filme extrudiert und zur Verfestigung abkühlt, durch Strecken in Längsrichtung und Querrichtung biaxial orientiert und anschließend thermofixiert, dadurch gekennzeichnet, daß das Strecken in Längsrichtung vor dem Strecken in Querrichtung durchgeführt wird und die Temperatur während der Längsstreckung oberhalb von 100°C und unterhalb von 120°C liegt.

9. Verfahren zur Herstellung der Folie nach Anspruch 7 bei dem man die Schmelze des die Träger schichte bildenden Polymeren zusammen mit den darin verteilten Teilchen und Festsubstanz extrudiert und zur Verfestigung abkühlt, durch Strecken in Längsrichtung und Querrichtung biaxial orientiert und anschließend thermofixiert, dadurch gekennzeichnet, daß das Strecken in Längsrichtung vor dem Strecken in Richtung durchgeführt wird und die Temperatur während der Längsstreckung oberhalb von 100°C und unterhalb von 120°C liegt und daß man die Siegelschicht auf die abgekühlte Trägerschicht nach dem Thermofixieren in Form eines Latex aufbringt.

## Claims

1. Opaque, glossy, biaxially oriented film comprised of a support layer on a basis of polypropylene wherein solid particles having an average size of 0.2 to 20 μm, preferably of 2 to 8 μm, are present in an amount of between 2 to 25 % by weight, in particular of 5 to 20 % by weight, relative to the total weight of the film, and of (a) sealable, outer top layer(s), whereby the density of the total film is inferior to the theoretical density corresponding to the sum of the densities of the individual components, characterized in that a mixture comprising inorganic white solid particles and a heat-resistant colored substance is present in the support layer, whereby the proportion of the colored substance is 0.01 to 2 % by weight, relative to the total weight of the film, and the density of the film is not more than 80 preferably 60 to 75 %, of the calculated theoretical density.

2. Film as claimed in claim 1, wherein the white particles consist of calcium carbonate, titanium dioxide, silicon dioxide and/or a silicate and wherein the colored substance consists of colored, in particular black, yellow and/or red, inorganic pigments, whereby the average size of the pigments is inferior to the average size of the white particles.

3. Film as claimed in claim 2, wherein the mixture comprises calcium carbonate particles as white particles and carbonblack particles as black pigments, the carbonblack particles having a preferred average size in the range of 0.01 to 1 μm.

4. Film as claimed in claim 3, wherein the carbonblack particles are present in an amount of 0.04 to 1 % by weight, relative to the total weight of the film.

5. Film as claimed in any of claims 2 to 4, wherein the weight of the mixture of particles and pigments amounts to 7 to 15 % of the total weight of the film.

6. Film as claimed in any of claims 1 to 5, which has a thickness (DIN 53370) of 15 to 60 μm, in particular of 20 to 50 μm whereby the sealable surface layer(s) has (have) a thickness of 0.2 to 2 μm.

7. Film as claimed in any of claims 1 to 6, wherein the sealable layer(s) can be sealed at temperatures above 30°C below 50°C.

8. Process for producing the film as claimed in any of claims 1 to 6, which comprises jointly and simultaneously extruding, as super-imposed films, the melt of the polymer forming the support layer, in which the particles and colored substance are distributed, and the melt of the polymer forming the sealable layer(s) and cooling down the extrudate for solidification, biaxially orienting the product by stretching in the longitudinal direction and in the transverse direction and thereafter heat-setting the film, characterized in that stretching in the longitudinal direction is performed prior to stretching in the transverse direction and in that the temperature during the longitudinal stretching is more than 100°C and less than 120°C.

9. Process for producing the film as claimed in claim 7, which comprises extruding the melt of the polymer forming the support layer in which the particles and colored substance are distributed and cooling down the extrudate for solidification, biaxially orienting the product by stretching in the longitudinal direction and in the transverse direction and thereafter heat-setting the film, characterized in that stretching in the longitudinal direction is performed prior to stretching in the transverse direction, that the temperature during the longitudinal stretching is more than 100°C and less than 120°C, and in that after the heat-setting treatment the sealable layer is applied to the cooled-down support layer, in the form of a latex.

## Revendications

1. Feuille opaque, brillante, orientée bi-axialement, comprenant une couche support à base de polypropylène, dans laquelle se trouvent des particules solides ayant une dimension moyenne de 0,2 à 20, de préférence de 2 à 8 μm, en quantité de 2 à 25, en particulier de 5 à 20 % en poids par rapport au poids total de la feuille, et une (des) couche(s) superficielle(s) externe(s) scellable(s), la densité de la feuille étant plus petite que la densité calculée d'après la somme des différents constituants, caractérisée en ce que la couche support contient un mélange de particules solides minérales blanches et d'une substance colorante stable à la chaleur, la proportion de substance colorée étant de 0,01 à 2 % en poids, par rapport au poids total de la feuille, et la densité de la feuille étant au maximum de 80, de préférence de 60 à 75 % de la densité calculée.

2. Feuille selon la revendication 1, caractérisée en ce que les particules blanches se composent de carbonate de calcium, de dioxyde de titane, de dioxyde de silicium et/ ou d'un silicate et en ce que la substance colorante se compose de pigments minéraux colorés, en particulier noirs, jaunes et/ou rouges, la dimension moyenne des particules de pigment étant plus petite que celle des particules blanches.

3. Feuille selon la revendication 2, caractérisée en ce que le mélange se compose de particules de carbonate de calcium comme particules blanches et de particules de noir de carbone comme particules noires, les particules de noir de carbone ayant une dimension moyenne préférée comprise entre 0,01 et 1 μm.

4. Feuille selon la revendication 3, caractérisée en ce que les particules de noir de carbone sont présentes en quantité de 0,04 à 1 % en poids par rapport au poids total de la feuille.

5. Feuille selon l'une des revendications 2 à 4, caractérisée en ce que le mélange de particules et de pigments représente 7 à 15 % en poids du poids total de la feuille.

6. Feuille selon l'une des revendications 1 à 5, caractérisée en ce que son épaisseur (DIN 53370) est de 15 à 60, en particulier de 20 à 50 μm, la (les) couche(s) superficielle(s) scellable(s) ayant environ 0,2 à 2 μm d'épaisseur.

7. Feuille selon l'une des revendications 1 à 6, caractérisée en ce que la (les) couche(s) de scellement est (sont) scellable(s) à une température supérieure à 30°C et inférieure à 50°C.

8. Procédé de fabrication de la feuille selon l'une des revendications 1 à 6, dans lequel on extrude la masse fondue du polymère formant la couche support avec les particules et la substance colorante qui y sont réparties et la masse fondue du polymère formant la (les) couche(s) de scellement ensemble et simultanément en pellicules superposées, on les refroidit pour les solidifier, on les oriente bi-axialement par étirage dans le sens longitudinal et dans le sens transversal et ensuite on les "thermofixe", caractérisé en ce que l'étirage dans le sens longitudinal est effectué avant l'étirage dans le sens transversal et en ce que la température pendant l'étirage longitudinal est supérieure à 100°C et inférieure à 120°C.

9. Procédé de fabrication de la feuille selon la revendication 7, dans lequel on extrude la masse fondue du polymère formant la couche support avec les particules et la substance colorante qui y sont réparties et on la refroidit pour la solidifier, on l'oriente bi-axialement par étirage dans le sens longitudinal et dans le sens transversal et ensuite on la "thermofixe", caractérisé en ce que l'étirage dans le sens longitudinal est effectué avant l'étirage dans le sens transversal, en ce que la température pendant l'étirage dans le sens longitudinal est supérieure à 100°C et inférieure à 120°C et en ce que l'on applique la couche de scellement sous forme d'un latex sur la couche support refroidie après le thermofixage.